# EUROPEAN PATENT SPECIFICATION

(11) **EP 2 770 828 B1**
(45) Date of publication and mention of the grant of the patent: **04.07.2018**
(21) Application number: 12843924.7
(22) Date of filing: 26.10.2012
(51) Int. Cl.: A01N 25/04, A01N 25/10

(54) **PROCESS FOR PRODUCING A DISPERSION CONCENTRATE**
VERFAHREN ZUR HERSTELLUNG EINES DISPERSIONSKONZENTRATES
PROCÉDÉ POUR LA PREPARATION D'UNE DISPERSION CONCENTRÉE

(30) Priority: 27.10.2011 US 201161552201 P
(43) Date of publication of application: 03.09.2014
(73) Proprietor: Syngenta Participations AG, 4058 Basel (CH)
(72) Inventor: KIM, Sejong, Greensboro, NC 27409 (US); FOWLER, Jeffrey, David, Greensboro, NC 27409 (US)
(74) Representative: Syngenta International AG
(86) International application number: PCT/US2012/062226
(87) International publication number: WO 2013/063471

(56) References cited:
- WO-A1-2011/121407
- US-A1- 2004 137 031
- US-A1- 2006 193 882
- US-A1- 2008 171 658
- US-B1- 6 555 176

## Description

The present invention relates to a method of producing a dispersion concentrate comprising agrochemicals, the method comprising: a. dissolving or suspending at least one agrochemically active ingredient in a non-aqueous curable liquid mixture comprising at least one suitable cross-linkable epoxy resin selected from monomers, oligomers, prepolymers and blends thereof; b. emulsifying said dispersion concentrate in to a second liquid containing dispersant or surfactant to a droplet size of from 0.1 to 200 microns; and c. effecting crosslinking of the epoxy resin mixture to produce cured thermoset epoxy resin polymer particles having the at least one agricultural active ingredient distributed therein; and wherein said dispersion is not a Pickering dispersion; and wherein said dispersion comprises a continuous liquid phase and a dispersed phase. Also disclosed are chemical compositions, the preparation of such compositions and a method of using such compositions, for example, to combat pests or as plant growth regulators.

### BACKGROUND OF THE INVENTION

Agriculturally active ingredients (agrochemicals) are often provided in the form of concentrates suitable for dilution with water. Many forms of agricultural concentrates are known and these consist of the active ingredient and a carrier, which can include various components. Water-based concentrates are obtained by dissolving, emulsifying and/or suspending agriculturally active materials in water. Due to the relatively complex supply chain for crop protection agents, such concentrate formulations may be stored for long periods and may be subjected during storage and shipping to extreme temperature variations, high-shear and repetitive vibration patterns. Such supply chain conditions can increase the likelihood of formulation failure such as, for example, water mediated degradation, flocculation, thickening, sedimentation and other stability problems.

Accordingly, the efficient use of aqueous systems with certain agrochemicals and crop protection agents is restricted due to their poor chemical stability when exposed to water during storage. Typically, hydrolysis is the most common water-mediated degradation mechanism; however, agricultural concentrates with water-sensitive active ingredients are also subject to oxidation, dehalogenation, bond cleavage, Beckmann rearrangement and other forms of degradation on exposure to water.

In some cases it may be desirable to combine different agrochemicals in a single formulation taking advantage of the additive properties of each separate agrochemical and optionally an adjuvant or combination of adjuvants that provide optimum biological performance. For example, transportation and storage costs may be reduced by using a formulation in which the concentration of the active agrochemical(s) is as high as is practicable and in which any desired adjuvants are "built-in" to the formulation as opposed to being separately tank-mixed. However, the higher is the concentration of the active agrochemical(s), the greater is the probability that the stability of the formulation may be compromised or that one or more components may phase separate. In addition, avoidance of formulation failure can be more challenging when multiple active ingredients are present because of physical or chemical incompatibilities between these chemicals such as, for example, when one active ingredient is an acid, a base, an oily liquid, a hydrophobic crystalline solid or a hydrophilic crystalline solid; and another active ingredient present has different properties.

Another challenge arises when a user of an agrochemical liquid concentrate formulation adds dilutes the formulation to water (for example in a spray tank; often referred to as 'dilutes the formulation in water') to form a dilute aqueous spray composition. Such agrochemical spray compositions are widely used, but their performance sometimes may be limited by the tendency of certain agrochemicals to degrade in a spray tank on exposure to water. For example, agrochemical breakdown may increase with increasing alkalinity or increasing water temperature or with an increased length of time the spray composition is left in the tank.

It may also be desirable to improve the effectiveness of the agrochemicals by controlling the release rate of agrochemical from the formulation into an application site. For agrochemicals that are to any significant extent soluble or dispersible in water, this is a particular challenge if water is present in the formulation, because of the tendency of the agrochemical to come to thermodynamic equilibrium and partially dissolve or disperse within the formulation. To the extent that the agrochemical dissolves or disperses, this reduces the physical stability of the formulation and negates any controlled release properties. Moreover, it may be desirable to combine agrochemicals in a single formulation and control their release rates independently, for instance in cases where the modes of action of the agrochemicals renders them antagonistic if both are delivered at the same rate.

It also may be desirable to improve the acute toxicity of the agrochemical formulation by controlling the release rate of the agrochemical such that no release of the agrochemical occurs until the formulation is exposed to water. Certain agrochemicals are intrinsically irritating to the skin or eyes, or are otherwise intrinsically hazardous, and this may be mitigated by formulating these agrochemicals so that within the concentrated product the agrochemical is substantially unavailable, yet the biological availability is unimpaired upon application to the environment.

In addition, spray tank mixes can contain a variety of chemicals and adjuvants that may interact and change the effectiveness of one or more of the agrochemicals included therein. Incompatibility, poor water quality and insufficient tank agitation may lead to reduced effectiveness of sprays, increased phytotoxicity and may affect equipment performance.

Pesticide-comprising aqueous polymer dispersions are obtained from polymerization of ethylenically unsaturated monomers are known, for example, from US2008/0171658 and EP0517669A1. One limitation of polymer dispersions of this type is that a satisfactory non-aqueous dispersion (which is desirable for hydrolytically unstable active ingredients) is difficult to prepare since ethylenically unsaturated monomers are miscible in most non-aqueous liquids, which may cause degradation of a certain active ingredients.

Considering the variety of conditions and special situations under which agrochemical liquid concentrate formulations are stored, shipped and used around the world, there remains a need for concentrate formulations comprising agrochemicals, including water-soluble, water-dispersible or water-sensitive agrochemicals, which provide stability benefits under at least some of those conditions and situations. There is a further need for such formulations having high loading that are stable when diluted with water under a wide range of field conditions. There is yet a further need for such formulations that have controlled release rates of agrochemicals into the application site from the formulation and that work under a variety of conditions.

Similar properties are required in formulations in non-agricultural fields, for instance for controlled delivery of pharmaceutically active ingredients, for controlled delivery of flavours from foods, for controlled delivery of dyes or pigments, for controlled release of fragrances from cosmetic or household products, or for controlled delivery of enzymes and detergents in cleaning products. In these industries and others there is a need for the ability to prepare stable formulations of components that can be released to the target site upon application.

### SUMMARY OF THE INVENTION

The present disclosure provides a dispersion comprising
(a) a continuous liquid phase; and
(b) a solid phase of epoxy-polymer particles dispersed in the continuous liquid phase; where
   the polymer is formed from monomers that are insoluble in the continuous phase; an active ingredient is present within the polymer particles; and
   the dispersion is not a Pickering dispersion.

The dispersed solid phase comprises epoxy-polymer particles prepared from either a curable or polymerisable resin.

The term 'the polymer is from monomers that are insoluble in the continuous phase' means that at the temperatures to which the dispersion is exposed [typically from 0°C to 35°C in the case of agrochemical formulations] each monomer is less than 1.0g/litre soluble in the continuous phase, more suitably less than 0.1g/litre soluble.

In one aspect, the continuous phase is an aqueous phase.

In an alternative aspect, the continuous phase is a non-aqueous phase.

In one embodiment, a surfactant is present in an amount effective to stabilise the polymerisable epoxy-resin in an emulsion state during the process which is used to prepare the dispersed phase.

In another embodiment, the chemical agent is a solid and is distributed within the dispersed solid phase, or is a liquid and is distributed within the dispersed solid phase.

Suitably the chemical agent may be a flavour, a fragrance, an enzyme, a detergent, a pharmaceutical active ingredient or an agrochemical active ingredient; more suitably it is an agrochemical active ingredient.

The agrochemical active ingredient may be an insecticide, an herbicide, a fungicide, an acaricide or a plant growth regulator; suitably it is an insecticide, an herbicide or a fungicide.

In one embodiment the continuous liquid phase is a water-immiscible liquid, a water-miscible liquid, or mixtures thereof.

In an alternative embodiment the continuous liquid phase is a non-aqueous liquid.

In another embodiment the polymer particles also contain a non-cross-linkable mobile chemical such that the extraction of this chemical from the dispersed solid phase renders it porous in a manner that allows the chemical agent to diffuse out from the dispersed phase. In another embodiment, the polymers forming the polymer particles contain hydrophilic groups that hydrate on exposure to water, thereby increasing the permeability of the polymer matrix and allowing the chemical agent to diffuse out from the dispersed phase.

In a further aspect, the dispersed phase is not limited to being an epoxy-polymer: the dispersed solid phase may comprise polymer particles prepared by curing a thermoset resin or a thermoplastic resin. In another embodiment, the dispersed solid phase of thermoset or thermoplastic resin also comprises a non-cross-linkable mobile chemical and/or a hydrophilic group that hydrate on exposure to water.

In one embodiment, polymerizable thermoset resins are understood to include all molecules that may be irreversibly polymerized or cured to form a polymeric matrix that does not melt or deform at elevated temperatures below the point of thermal decomposition. The polymerization reaction may be initiated thermally, by addition of chemical curing agents or by suitable irradiation to create radicals or ions such as by visible, UV, microwave or other electromagnetic irradiation, or electron beam irradiation. Examples include the phenolics, ureas, melamines, epoxies, polyesters, silicones, rubbers, polyisocyanates, polyamines and polyurethanes. In addition, bioplastic or biodegradable thermoset resins may be used including epoxy or polyester resins derived from natural materials such as vegetable oil, soy or wood and the like.

In another embodiment, the dispersed solid phase comprises polymer particles comprising a thermoplastic resin. Thermoplastic resins are understood to include all molecules that may be polymerized or cured to form a polymeric matrix that can melt or deform at elevated temperatures below the point of thermal decomposition. The polymerization reaction may be initiated thermally, by addition of chemical curing agents or by suitable irradiation to create radicals or ions such as by visible, UV, microwave or other electromagnetic irradiation, or electron beam irradiation. Examples of suitable ethylenically unsaturated monomers include styrene, vinyl acetate, α-methylstyrene, methyl methacrylate, those described in US 2008/0171658 and the like. Examples of thermoplastic polymers for polymer particles that can be prepared from in-situ emulsion polymerization include polymethylmethacrylate, polystyrene, polystyrene-co-butadiene, polystyrene-co-acrylonitrile, polyacrylate, polyalkyl acrylate, polyalkyl acetate, polyacrylonitrile or their copolymers.

The present disclosure relates to dispersions which are concentrated dispersions, also disclosed are dilute dispersions [for example prepared from the dilution of a concentrated dispersion in a spray tank of water].

When the chemical agent is an agrochemical active ingredient, the compositions disclosed can be used directly or with dilution, to combat pests [such as insets, fungi and weeds] or as plant growth regulators.

It has been found that dispersion concentrates of an agrochemical active ingredient in a liquid can be prepared by using polymerised, cured or solidified polymeric resin to entrap the agrochemical active ingredient in a polymer matrix when a surfactant is used to stabilise the polymer resin in an emulsion state during the curing reaction or solidification process. At least one agrochemical active ingredient can be distributed within the polymer matrix which is dispersed as particles within the continuous liquid phase. Other active ingredients may optionally be dispersed, dissolved, emulsified, microemulsified or suspended within the continuous phase.

The release rate of an agrochemical active ingredient from the dispersed solid phase can be controlled by the optional incorporation within the dispersed phase of mobile non-cross-linkable molecules, where these molecules are chosen to be insoluble in the continuous phase, miscible or immiscible with the polymer resin that will form the particulate polymer matrix, soluble in water or some other medium to which the formulation will be exposed upon use, and of molecular dimensions such that the voids they create in the dispersed phase upon extraction, allow the desired release of the agrochemical active ingredients. The mobile non-cross-linkable molecules may be present in the dispersed solid phase either as a molecular dispersion (if miscible with the polymer resin), or as discrete inclusions (if immiscible with the polymer resin).

In another embodiment, the polymers forming the polymer particles contain hydrophilic groups that hydrate on exposure to water, thereby increasing the permeability of the polymer matrix and allowing the chemical agent to diffuse out from the dispersed phase.

The release rate of an agrochemical active ingredient from the dispersed solid phase can be further controlled by the optional incorporation within the dispersed phase of non-porous particulate minerals as a diffusion barrier. For purposes of the present disclosure, non-porous means that the mineral lacks pores larger than individual molecules of the agrochemical active ingredient, such that the diffusion coefficient of the agrochemical through particles of the mineral is less than 10⁻¹⁵m²s⁻¹.

Dispersion concentrates of the disclosure have utility also outside the agricultural field where there is need to prepare stable formulations and deliver chemical agents to a target site. For these purposes, discussion of the agrochemical may be replaced with other chemical agents as required. In the context of the present disclosure, chemical agents therefore include any catalyst, adjuvant, vaccine, genetic vector, drug, fragrance, flavour, enzyme, spore or other colony forming unit (CFU), detergent, dye, pigment, adhesive or other component where release of the chemical agent from the formulation is required. In addition the dispersion concentrates may be dried to prepare a powder or granular product as desired.

The polymerizable resins suitable for use in preparing the dispersed phase cured polymer matrix can be selected from any monomers, oligomers or prepolymers which are polymerisable to thermoset or thermoplastic polymer particles.

The present disclosure further relates to polymer particles comprising an entrapped agrochemical that is either homogeneously or non-homogeneously distributed within such particles or present in the form of domains within such particles.

The present disclosure also includes a method for combating or controlling pests or regulating the growth of plants at a locus such as soil or foliage which comprises treating said locus with a dispersion concentrate according to the disclosure or dispersing a concentrate according to the present disclosure in water or liquid fertilizer and treating said locus with the obtained diluted aqueous end-use formulation.

### DETAILED DESCRIPTION

Accordingly, in one embodiment, the liquid dispersion compositions of the present disclosure comprise:
a) a continuous, liquid phase, optionally comprising at least one chemical agent; and
b) at least one dispersed, solid phase comprising epoxy-polymer particles, wherein the particles have at least one chemical agent distributed therein.

In one embodiment, the epoxy-polymer particles comprise an entrapped agrochemical that is either homogeneously or non-homogeneously distributed within such particles or present in the form of domains within such particles.

In one embodiment, the polymer particles in the dispersed phase have a mean particle size of at least one micron. In the context of the present disclosure, mean particle or droplet size indicates the volume-weighted mean, commonly designated D(v,0.5) (that is, the diameter of a sphere whose volume equates to the measured mean volume of the particles).

In one embodiment, the agrochemical active ingredient (a.i.) in the dispersed phase is water-soluble, water-dispersible or water-sensitive.

In one embodiment, the agrochemical active ingredient is (i) a solid and is distributed within the dispersed solid phase or is (ii) a liquid and is distributed within the dispersed solid phase or is (iii) a gas distributed within the dispersed solid phase or (iv) is contained in a molecular cage.

In another embodiment, the dispersions of the present disclosure are those that are formed using curing agents, monomers, oligomers, prepolymers or blends thereof that exhibit a slow curing or polymerization reaction when combined with the curing agents at ambient conditions. Particularly suitable are those curing agents, monomers, oligomers, prepolymers or blends thereof that exhibit no significant increase in viscosity under ambient conditions for a period of at least 15 minutes, more particularly 30 minutes, most particularly 1 hour, after mixing with the curing agent.

In accordance with one embodiment of the disclosure, polymerisable thermoset resins are understood to include all molecules that may be irreversibly polymerised or cured to form a polymeric matrix that does not melt or deform at elevated temperatures below the point of thermal decomposition. The polymerisation reaction may be initiated thermally, by addition of chemical curing agents or by suitable irradiation to create radicals or ions such as by visible, UV, microwave or other electromagnetic irradiation, or electron beam irradiation. Examples include the phenolics, ureas, melamines, epoxies, polyesters, silicones, rubbers, polyisocyanates, polyamines and polyurethanes. In addition, bioplastic or biodegradable thermoset resins may be used including epoxy or polyester resins derived from natural materials such as vegetable oil, soy or wood and the like.

The polymerisable resins suitable for use in the disclosure can also be chosen to be sufficiently hydrophobic such that, when the concentrate is diluted into water to form an aqueous spray solution, the particles of the cured polymer matrix protect a water-soluble, water-dispersible or water-sensitive agrochemical active ingredient distributed therein from exposure to water for a period of time depending principally on the size of the dispersed polymer particle. In one embodiment, a water-sensitive agrochemically active ingredient is homogeneously distributed in the polymer matrix or is present in the form of domains within the polymer matrix or particle. One skilled in the art will readily determine the optimum particle size within the scope of the current disclosure that is sufficient for the desired end-use application. In one embodiment, the polymer particles of the dispersed phase have a mean particle size of from 0.1 to 200 microns, more particularly from 0.5 to 100 microns, most particularly from 1 to 80 microns.

As noted above, the release rate of agrochemical active ingredients from the dispersed solid phase can be further controlled by the optional incorporation within the dispersed phase of non-porous particulate minerals as a diffusion barrier.

In another embodiment applicable for a non-aqueous continuous phase, the affinity of the non-aqueous liquid for the agrochemical active ingredient distributed in the dispersed solid phase is such that substantially all of the agrochemical active ingredient remains in the dispersed solid phase and substantially none migrates to the continuous phase. Those skilled in the art will readily be able to determine whether a particular non-aqueous liquid meets this criterion for a specific agrochemical active ingredient in question by following any standard test procedure for determining the partition coefficient of a compound (in this case, the agrochemical active ingredient of the dispersed phase) between the continuous phase and the dispersed solid phase. Accordingly, the dispersed solid phase is immiscible with the continuous phase.

Examples of water-immiscible, non-aqueous liquids suitable for use in the continuous phase include: petroleum distillates, vegetable oils, silicone oils, methylated vegetable oils, refined paraffinic hydrocarbons (such as ISOPAR® V, for example), mineral oils, alkyl amides, alkyl lactates, alkyl acetates, or other liquids and solvents with a log P of 3 or above at 25°C, and mixtures thereof. In one embodiment, the water-immiscible, non-aqueous liquid used in the continuous phase a) has a log P of about 4 or above. Log P is the logarithm of ratio of the concentration of the un-ionized solute in n-octanol to that in water.

In another embodiment, the non-aqueous liquids suitable for use in the continuous phase are substantially water-miscible. In the context of the disclosure, the term "substantially water-miscible" means a non-aqueous liquid that forms a single phase when present in water at a concentration up to at least 50% by weight.

In another embodiment, the non-aqueous liquids suitable for use in the continuous phase are substantially water-immiscible. In the context of the disclosure, the term "substantially water-immiscible" means a non-aqueous liquid that forms two phases when mixed with water at a concentration below 10% by weight

Substantially water-miscible non-aqueous liquids suitable for use in the continuous phase include, for example, propylene carbonate such as JEFFSOL® AG-1555 (Huntsman); a water-miscible glycol selected from ethylene glycol, diethylene glycol, triethylene glycol, propylene glycol, dipropylene glycol, tripropylene glycol, butylene glycol, hexylene glycol and polyethylene glycols having a molecular weight of up to about 800; an acetylated glycol such as di(propylene glycol) methyl ether acetate or propylene glycol diacetate; triethyl phosphate; ethyl lactate; gamma-butyrolactone; a water-miscible alcohol such as propanol or tetrahydrofurfuryl alcohol; N-methyl pyrrolidone; dimethyl lactamide; and mixtures thereof. In one embodiment, the non-aqueous, substantially water-miscible liquid used in the continuous phase is a solvent for at least one optional agrochemical active ingredient.

In another embodiment, the non-aqueous, substantially water-miscible liquid used in the continuous phase is fully miscible with water in all proportions. In another embodiment, the non-aqueous, substantially water-miscible liquid used in the continuous phase is a waxy solid such as polyethylene glycol having a molecular weight above about 1000Dalton and is maintained in the liquid state by forming the composition at an elevated temperature.

In one embodiment of the disclosure, the dispersed solid phase comprises a cured resin polymer with sufficient hydrophobicity so that when the concentrate is emulsified upon dilution with water, the particles of such cured resin polymer matrix continue to protect the water-soluble, water-dispersible or water-sensitive agrochemical distributed therein from exposure to water in the diluted aqueous spray formulation for a period well within the acceptable range for such dilutions that are to be used for agricultural spray applications. For example, in one embodiment, a major amount of a water-soluble, water-dispersible or water-sensitive agrochemical can be protected from exposure to water for more than about 1 hour in an agitated spray tank.

In a further embodiment, the aqueous liquids suitable for use in the continuous phase are solutions of water-soluble solutes in water.

Water-soluble solutes suitable for use in the continuous phase include salts such as halides, nitrates, sulfates, carbonates, phosphates, nitrites, sulfites, nitrides and sulfides of ammonium and of metals such as those of groups 1 to 12 of the periodic table. Other suitable solutes include sugars and osmolytes such as polysaccharides, proteins, betaines and amino acids.

In one embodiment, the aqueous liquids suitable for use in the continuous phase are mixtures of water and a substantially water-miscible non-aqueous liquid. In the context of the disclosure, the term "substantially water-miscible" means a non-aqueous liquid that forms a single phase when present in water at a concentration up to at least 50% by weight.

Substantially water-miscible non-aqueous liquids suitable for use in the continuous phase include, for example, propylene carbonate; a water-miscible glycol selected from ethylene glycol, diethylene glycol, triethylene glycol, propylene glycol, dipropylene glycol, tripropylene glycol, butylene glycol, hexylene glycol and polyethylene glycols having a molecular weight of up to about 800Dalton; an acetylated glycol such as di(propylene glycol) methyl ether acetate or propylene glycol diacetate; triethyl phosphate; ethyl lactate; gamma-butyrolactone; a water-miscible alcohol such as propanol or tetrahydrofurfuryl alcohol; N-methyl pyrrolidone; dimethyl lactamide; and mixtures thereof. In one embodiment, the non-aqueous, substantially water-miscible liquid used in the continuous phase is a solvent for at least one optional agrochemical active ingredient.

In another embodiment, the aqueous, substantially water-miscible liquid used in the continuous phase is fully miscible with water in all proportions. Alternatively, the aqueous, substantially water-miscible liquid used in the continuous phase is a waxy solid such as polyethylene glycol having a molecular weight above about 1000Dalton and the mixture of this waxy solid with water is maintained in the liquid state by forming the composition at an elevated temperature.

Those skilled in the art will appreciate that the quantities of water and the nature and quantity of the non-aqueous, water-miscible liquid or water-soluble solute can be varied to provide mixed aqueous liquids suitable for use in the continuous phase and these quantities can be determined without undue experimentation. In one embodiment, the aqueous continuous phase comprises from 5% to 95% by weight, more preferably from 30% to 90% by weight, ethylene glycol with the balance being water. In another embodiment, the aqueous continuous phase comprises from 5% to 95% by weight, more preferably from 30% to 90% by weight, glycerol with the balance being water.

In one embodiment, when the concentrate is diluted in water, some of the agrochemical slowly diffuses out of the polymer particles. The agrochemical release rate from the emulsified polymer particles in the spray tank can be adjusted, for example, by varying the size of the dispersed polymer particles in the concentrate, the concentration of active ingredient in the polymer, the pH of the spray tank dispersion, the optional inclusion of non-porous particulate minerals (as diffusion barriers) in the polymer particles, and the amount and nature of the thermoplastic polymers or polymerisable resin including monomers, oligomers, prepolymers and/or hardeners used to form the polymer particles.

In this regard, the dispersed phase can also include one or more non-cross-linkable mobile chemicals such that the extraction of this chemical from the dispersed phase renders it porous in a manner that allows the chemical agent to diffuse out from the dispersed phase. The mobile chemical may be chosen to diffuse out rapidly within the formulation concentrate, such that the polymer matrix is rendered so porous that the agrochemical is rapidly released upon exposure to water. Alternatively the mobile chemical may be chosen to be of limited solubility in the non-aqueous continuous phase, such that the mobile chemical diffuses out of the polymer matrix slowly after the formulation has been diluted in water or applied to its target location, so that the agrochemical is only substantially released at the target location. Examples include surfactants, solvents, oligomers, polymers, copolymers, acids, bases, substantially water-soluble compounds or substantially water-insoluble compounds. In a specific embodiment, the mobile chemical is selected such that it has limited solubility in a particular non-aqueous continuous phase, yet upon dilution in water or application to the target site, the solubility is higher than within the dispersion concentrate such that the mobile chemical is dissolved out of the polymer matrix rendering it porous and allowing the active ingredient to be released.

In another specific embodiment the mobile chemical is selected such that it has limited solubility in aqueous environments but high solubility in waxy materials such as a plant cuticle, so that the mobile chemical is only substantially extracted from the matrix on contact with a plant leaf, and the active ingredient is then mainly released only on the leaf surface.

In another embodiment, a pH-sensitive release of the agrochemical active is achieved by creating a polymer matrix with excess amine groups. On dilution the amine groups hydrate, but the rate and extent of hydration increases at lower pH. The pH on dilution in the spray tank can be controlled by including within the dispersed phase base components, but after application the pH eventually becomes neutral and the release rate increases. Alternatively, a polymer matrix is created with excess acidic groups or other bases than amines. The nature of the pH sensitivity can be further adjusted by choosing acid or base groups of varying respective pKa or pKb values.

In another embodiment, the active ingredient release profile from the dispersed phase may be modified by incorporating cross-linkable monomers that contain hydrophilic groups such that on dilution into water the polymer matrix particles hydrate and expand so that the matrix becomes more permeable. In a particular embodiment, the cross-linkable monomers are selected from glycerol diglycidyl ether and diglycidyl ether of polyethyleneglycol epoxy resin.

The non-cross-linkable mobile chemical in the disperse phase may optionally be selected to also perform as a surfactant or dispersant within the liquid dispersion concentrate that is used to prepare the liquid agrochemical compositions of the present disclosure. If selected in this manner, the mobile chemical will adsorb to the surfaces of particles present in the dispersion concentrate and thereby stabilize the dispersion of those particles. This behaviour will be observable in at least one of the following ways: the particles will be distributed individually rather than as agglomerates within the dispersion concentrate when observed microscopically, the viscosity of the dispersion concentrate will be reduced when the mobile chemical is added, or the particles will have a greater tendency to remain within the disperse phase instead of being lost to the continuous phase when the liquid agrochemical compositions are prepared. Examples of suitable mobile chemicals useful for this purpose include copolymers of an α-olefin and an N-vinylpyrrolidone such as, for example, alkylated vinylpyrrolidone copolymers such as the Agrimers (e.g., Agrimer® AL-22, based on 1-ethenylhexadecyl-2-pyrrolidinone) (International Specialty Products (ISP) Corporation), or copolymers of an α-olefin and ethylene glycol such as, for example Atlox 4914 of Croda Corp, or organosilicon surfactants such as Silwet L-77 (Momentive Performance Chemicals).

In one embodiment, the liquid dispersion concentrate compositions of the present disclosure comprise a mixture of polymer particles each containing one or more than one chemical agent (such as an agrochemical active ingredient). Each chemical agent is contained within the same or different dispersed phase polymer particles, and each respective dispersed phase particle optionally includes a different mobile chemical and/or polymer matrix as described above, such that each chemical agent or agent mixture has a different release profile. Optionally each respective solid dispersed phase may have a different particle size to any other dispersed phase.

The term "agrochemical active ingredient" refers to chemicals and biological compositions, such as those described herein, which are effective in killing, preventing, or controlling the growth of undesirable pests, such as, plants, insects, mice, microorganism, algae, fungi, bacteria, and the like (such as pesticidally active ingredients). The term may also apply to compounds that act as adjuvants to promote the uptake and delivery of other active compounds. The term may also apply to compounds that control the growth of plants in a desired fashion (e.g. plant growth regulators), to a compound which mimics the natural systemic activated resistance response found in plant species (e.g. plant activator) or to a compound that reduces the phytotoxic response to a herbicide (e.g. safener). If more than one is present, the agrochemical active ingredients are independently present in an amount that is biologically effective when the composition is diluted, if necessary, in a suitable volume of liquid carrier, for example water, and applied to the intended target, e.g., the foliage of a plant or locus thereof.

Water-sensitive agrochemical active ingredients are those which are liquid or solid at ambient temperature and are subject to a water-mediated degradation such as hydrolysis, oxidation, dehalogenation, bond cleavage, Beckmann rearrangement and other forms of degradation on exposure to water. These materials share the common feature that it is sometimes not feasible to suspend or dissolve them in water and obtain formulations that display long-term stability.

As used herein, the term "degradation" denotes loss of the active ingredient, i.e. the water-soluble, water-dispersible or water-sensitive agrochemical, as a result of contact with water. Degradation can be determined simply by measuring the amount of the active ingredient present before and after contact with water.

Examples of water-soluble, water-dispersible or water-sensitive agriculturally active ingredients suitable to be distributed within the dispersed solid phase in accordance with the present disclosure include, but are not limited to:
- azoxystrobin;
- tefluthrin;
- S-metolachlor; and
- The neonicotinoid insecticides such as thiamethoxam.

Additionally, volatile agrochemical active ingredients such as those with a vapour pressure of at least 1Pa at ambient temperature are also suitably entrapped in the dispersed phase. Examples of such active ingredients include volatile nematicides such as methyl bromide, methyl iodide, chloropicrin and 1,3-dichloropropene.

In one embodiment, the optional active ingredients in the continuous phase may be in the state of a solution, an emulsion, a microemulsion, a microcapsule or a particle or a fine particle. In the context of the present disclosure, a fine particle is one substantially smaller than the dimensions of the solid polymeric particles of the dispersed phase, such that a plurality (at least 10) of active ingredient particles are within each particle of the dispersed phase, whereas a non-fine particle is one only slightly smaller than the dimensions of the solid polymeric particles of the dispersed phase, such that each polymeric particle contains only a few active ingredient particles.

Further aspects of the disclosure include a method of preventing or combating infestation of plant species by pests, and regulating plant growth by diluting an amount of concentrate composition with a suitable liquid carrier, such as water or liquid fertilizer, and applying to the plant, tree, animal or locus as desired. The formulations of the present disclosure may also be combined in a continuous flow apparatus with water in spray application equipment, such that no holding tank is required for the diluted product.

The liquid dispersion concentrate compositions can be stored conveniently in a container from which they are poured, or pumped, or into which a liquid carrier is added prior to application.

The advantages of the liquid dispersion concentrate compositions of the present disclosure include: storage-stability for extended periods, for example 6 months or longer at room temperature; multiple agrochemicals of different physical states may be conveniently combined in dispersions of mutually compatible solid particles; the release profiles of agrochemicals may be flexibly and independently controlled; simple handling is made possible for users because dilution is made with water, or other liquid carrier, for preparation of application mixtures; reduced degradation of water-sensitive active ingredients; reduced settling of the suspension during storage or on dilution; the compositions can easily be resuspended or redispersed with only a minor amount of agitation and are not susceptible to coalescence when dilution is made with fertilizer solutions for preparation of application mixtures.

The rate of application of the composition of the disclosure will depend on a number of factors including, for example, the active ingredients chosen for use, the identity of the pest to be controlled or the plants whose growth is to be inhibited and the formulations selected for use and whether the compound is to be applied to foliage, soil, for root uptake or by chemigation. As a general guide, however, an application rate of from 1 to 2000g active ingredient per hectare is suitable, in particular from 2 to 500g active ingredient per hectare.

In one embodiment, suitable rates for the agrochemical active ingredients used in the compositions disclosed are comparable to the existing rates given on the current product labels for products containing such actives. For example, Quadris® brand azoxystrobin can be applied at a rate of from 112g to 224g a.i./hectare and Quilt™ brand premix of azoxystrobin (75g/litre) / propiconazole (125g/litre) can be applied at a rate of from 0.75 to 1.5 litre/ha.

In one embodiment disclosed, a further component may be present to control the pH of the water used to dilute the composition prior to use.

If a solid agrochemical active material is present, the solid active ingredient may be milled to the desired particle size prior to dispersion within the polymerizable resin (monomers, oligomers, and/or prepolymers, etc.) that will form the polymer matrix particles. The solid may be milled in a dry state using an air-mill or other suitable equipment as necessary, to achieve the desired particle size. The particle size may be a mean particle size of from about 0.2 to about 20 microns, suitably from about 0.2 to about 15 microns, more suitably from about 0.2 to about 10 microns.

As used herein, the term "agrochemically effective amount" means the amount of an agrochemical active compound which adversely controls or modifies target pests or regulates the growth of plants (PGR). For example, in the case of herbicides, a "herbicidally effective amount" is that amount of herbicide sufficient for controlling or modifying plant growth. Controlling or modifying effects include all deviation from natural development, for example, killing, retardation, leaf burn, albinism, dwarfing and the like. The term plants refers to all physical parts of a plant, including seeds, seedlings, saplings, roots, tubers, stems, stalks, foliage and fruits. In the case of fungicides, the term "fungicide" shall mean a material that kills or materially inhibits the growth, proliferation, division, reproduction, or spread of fungi. As used herein, the term "fungicidally effective amount" or "amount effective to control or reduce fungi" in relation to the fungicidal compound is that amount that will kill or materially inhibit the growth, proliferation, division, reproduction, or spread of a significant number of fungi. As used herein, the terms "insecticide", "nematicide" or "acaricide" shall mean a material that kills or materially inhibits the growth, proliferation, reproduction, or spread of insects, nematodes or acarids, respectively. An "effective amount" of the insecticide, nematicide or acaricide is that amount that will kill or materially inhibit the growth, proliferation, reproduction or spread of a significant number of insects, nematodes or acarids.

In one aspect, as used herein, "regulating (plant) growth", "plant growth regulator", PGR, "regulating" or "regulation" includes the following plant responses; inhibition of cell elongation, for example reduction in stem height and internodal distance, strengthening of the stem wall, thus increasing the resistance to lodging; compact growth in ornamentals for the economic production of improved quality plants; promotion of better fruiting; increasing the number of ovaries with a view to stepping up yield; promotion of senescence of the formation of tissue enabling fruit to absciss; defoliation of nursery and ornamental bushes and trees for mail-order business in the fall; defoliation of trees to interrupt parasitic chains of infection; hastening of ripening, with a view to programming the harvest by reducing the harvest to one to two pickings and interrupting the food-chain for injurious insects.

In another aspect, "regulating (plant) growth", "plant growth regulator", "PGR", "regulating" or "regulation" also includes the use of a composition as defined according to the present disclosure for increasing the yield and/or improving the vigor of an agricultural plant. According to one embodiment disclosed, the inventive compositions are used for improved tolerance against stress factors such as fungi, bacteria, viruses and/or insects and stress factors such as heat stress, nutrient stress, cold stress, drought stress, UV stress and/or salt stress of an agricultural plant.

The selection of application rates relative to providing a desired level of pesticidal activity for a composition of the disclosure is routine for one of ordinary skill in the art. Application rates will depend on factors such as level of pest pressure, plant conditions, weather and growing conditions as well as the activity of the agrochemical active ingredients and any applicable label rate restrictions.

The present disclosure also relates also to dispersions where the continuous liquid phase, optionally comprises at least one agrochemically active ingredient (for example, in the state selected from a solution or a dispersion such as emulsion, a microemulsion, or a suspension of microcapsules or fine particles).

A further aspect of the disclosure relates to a dilute aqueous spray composition for combating pests or regulating the growth of plants at a locus comprising
a) a continuous aqueous phase comprising a suitable liquid carrier, such as water or a liquid fertilizer, in an amount sufficient to obtain the desired final concentration of each of the active ingredients in the spray composition;
b) at least one dispersed, solid phase comprising epoxy-polymer particles wherein the particles have at least one agrochemical active ingredient distributed therein; and the dispersion is not a Pickering dispersion; and
c) optionally, at least one agrochemical active ingredient dispersed, dissolved, suspended, microemulsified or emulsified in the liquid carrier.

In another embodiment, the disclosure relates to a dilute pesticidal and/or PGR composition for ultra low volume (ULV) application comprising:
a) a continuous phase comprising a carrier solvent having a flash point above 55°C in an amount sufficient to obtain the desired final concentration of each of the active ingredients in the ULV composition;
b) at least one dispersed, solid phase comprising epoxy-polymer particles wherein the particles have at least one agrochemical active ingredient distributed therein; and the dispersion is not a Pickering dispersion.

The disclosure relates also to a method for combating or preventing pests in crops of useful plants or regulating the growth of such crops, said method comprising:
1) treating the desired area, such as plants, the plant parts or the locus thereof with a concentrate composition comprising:
   a) a continuous liquid phase, optionally comprising at least one agrochemical active ingredient (in the state selected from a solution or a dispersion such as an emulsion, a microemulsion, or a suspension of microcapsules or fine particles);
   b) at least one dispersed, solid phase comprising epoxy-polymer particles wherein the particles have at least one agrochemical active ingredient distributed therein; and the dispersion is not a Pickering dispersion; or
2) diluting said concentrate composition, if necessary, in a suitable carrier, such as water, liquid fertilizer or a carrier solvent having a flash point above 55°C, in an amount sufficient to obtain the desired final concentration of each of the agrochemical active ingredients; and then treating the desired area, such as plants, the plant parts or the locus thereof with the dilute spray or ULV composition.

The term plants refers to all physical parts of a plant, including seeds, seedlings, saplings, roots, tubers, stems, flowers, stalks, foliage and fruits. The term locus refers to where the plant is growing or is expected to grow.

The composition according to the disclosure is suitable for all methods of application conventionally used in agriculture, e.g. pre-emergence application, post-emergence application, post-harvest and seed dressing. The compositions according to the disclosure are suitable for pre- or post-emergence applications to crop areas.

The compositions according to the disclosure are suitable especially for combating and/or preventing pests in crops of useful plants or for regulating the growth of such plants. Preferred crops of useful plants include canola, cereals such as barley, oats, rye and wheat, cotton, maize, soya, sugar beets, fruits, berries, nuts, vegetables, flowers, trees, shrubs and turf. The components used in the composition of the disclosure can be applied in a variety of ways known to those skilled in the art, at various concentrations. The rate at which the compositions are applied will depend upon the particular type of pests to be controlled, the degree of control required, and the timing and method of application.

Crops are to be understood as also including those crops which have been rendered tolerant to herbicides or classes of herbicides (e.g. ALS-, GS-, EPSPS-, PPO-, ACCase and HPPD-inhibitors) by conventional methods of breeding or by genetic engineering. An example of a crop that has been rendered tolerant to imidazolinones, e.g. imazamox, by conventional methods of breeding is Clearfield® summer rape (canola). Examples of crops that have been rendered tolerant to herbicides by genetic engineering methods include e.g. glyphosate- and glufosinate-resistant maize varieties commercially available under the trade names RoundupReady® and LibertyLink®.

Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-451 878, EP-A-374 753, WO 93/07278, WO 95/34656, WO 03/052073 and EP-A-427 529. Examples of transgenic plants comprising one or more genes that code for an insecticidal resistance and express one or more toxins are KnockOut® (maize), Yield Gard® (maize), NuCOTIN33B® (cotton), Bollgard® (cotton), NewLeaf® (potatoes), NatureGard® and Protexcta®. Plant crops or seed material thereof can be both resistant to herbicides and, at the same time, resistant to insect feeding ("stacked" transgenic events). For example, seed can have the ability to express an insecticidal Cry3 protein while at the same time being tolerant to glyphosate.

Crops are also to be understood to include those which are obtained by conventional methods of breeding or genetic engineering and contain so-called output traits (e.g. improved storage stability, higher nutritional value and improved flavour).

Other useful plants include turf grass for example in golf-courses, lawns, parks and roadsides, or grown commercially for sod, and ornamental plants such as flowers or bushes.

Crop areas are areas of land on which the cultivated plants are already growing or in which the seeds of those cultivated plants have been sown, and also areas of land on which it is intended to grow those cultivated plants.

Other active ingredients such as herbicide, plant growth regulator, algaecide, fungicide, bactericide, viricide, insecticide, acaricide, nematicide or molluscicide may be present in the formulations of the present disclosure or may be added as a tank-mix partner with the formulations.

The compositions of the disclosure may further comprise other inert additives. Such additives include thickeners, flow enhancers, dispersants, emulsifiers, wetting agents, antifoaming agents, biocides, lubricants, fillers, drift control agents, deposition enhancers, adjuvants, evaporation retardants, freeze protecting agents, insect attracting odor agents, UV protecting agents, fragrances, and the like. The thickener may be a compound that is soluble or able to swell in water, such as, for example, polysaccharides of xanthans (e.g., anionic heteropolysaccharides such as RHODOPOL® 23 (Xanthan Gum)(Rhodia, Cranbury, NJ)), alginates, guars or celluloses; synthetic macromolecules, such as modified cellulose-based polymers, polycarboxylates, bentonites, montmorillonites, hectonites, or attapulgites. The freeze protecting agent may be, for example, ethylene glycol, propylene glycol, glycerol, diethylene glycol, saccharose, water-soluble salts such as sodium chloride, sorbitol, triethylene glycol, tetraethylene glycol, urea, or mixtures thereof. Representative antifoam agents are polydialkylsiloxanes, in particular polydimethylsiloxanes, fluoroaliphatic esters or perfluoroalkylphosphonic/perfluoroalkylphosphonic acids or the salts thereof and mixtures thereof. Suitable antifoams are polydimethylsiloxanes, such as Dow Corning® Antifoam A, Antifoam B or Antifoam MSA. Representative biocides include 1,2-benzisothiazolin-3-one, available as PROXEL® GXL (Arch Chemicals).

The compositions of the disclosure may be mixed with fertilizers and still maintain their stability.

The compositions of the disclosure may be used in conventional agricultural methods. For example, the compositions of the disclosure may be mixed with water and/or fertilizers and may be applied preemergence and/or postemergence to a desired locus by any means, such as airplane spray tanks, irrigation equipment, direct injection spray equipment, knapsack spray tanks, cattle dipping vats, farm equipment used in ground spraying (e.g., boom sprayers, hand sprayers), and the like. The desired locus may be soil, plants, and the like.

The present disclosure relates to methods of producing dispersed phase polymeric particles containing chemical agents, which are described in a manner wherein the chemical agents are agricultural active ingredients. Each method results in a dispersed phase that comprises a solid polymer matrix with at least one agriculturally active ingredient distributed therein, optionally a non-cross-linkable mobile chemical such that the extraction of this chemical from the dispersed phase renders it porous in a manner that allows the agrochemical active ingredient(s) to diffuse out from the dispersed phase, optionally a polymer matrix with hydrophilic groups that hydrate on exposure to water and render the matrix permeable in a manner that allows the agrochemical active ingredient(s) to diffuse out from the dispersed phase, and optionally a non-porous mineral that renders the dispersed phase more impermeable to the agrochemical active ingredient(s); where the dispersion is not a Pickering dispersion.

### Regarding a non-aqueous continuous phase:

The method of the invention comprises the following steps:
a. preparing a dispersion concentrate by dissolving or suspending at least one agrochemically active ingredient in a non-aqueous curable liquid mixture comprising at least one suitable cross-linkable resin (comprising monomers, oligomers, prepolymers or blends thereof), optionally where the resin contains hydrophilic groups, optionally a suitable hardener, catalyst or initiator, and one or more optional components selected from non-porous particulate minerals as diffusion barrier and/or non-crosslinkable mobile chemicals;
b. emulsifying said dispersion concentrate in to a non-aqueous liquid containing dispersants and/or surfactants to a droplet size of from 0.1 to 200 microns, which liquid does not contain a colloidal solid as (Pickering) emulsion stabilizer, and, optionally, certain suitable hardener, catalyst or initiators capable of diffusing into the dispersed uncured resin droplets; and
c. effecting crosslinking or cure of the cross-linkable resin mixture to produce cured thermoset resin polymer particles.

In one embodiment, the dispersion concentrate is prepared by:
a. dissolving or suspending at least one agrochemical active ingredient in a first non-aqueous liquid mixture (premix) comprising at least one suitable curable or polymerisable resin (comprising monomers, oligomers, prepolymers or blends thereof), optionally a suitable hardener, catalyst or initiator, and one or more optional components selected from non-porous particulate minerals (as diffusion barrier) and/or non-crosslinkable mobile chemicals;
b. emulsifying said solution or suspension in to a second non-aqueous liquid to a mean droplet size of from 0.1 to 200 microns, which liquid contains dispersants and/or surfactants, and does not contain a colloidal solid as (Pickering) emulsion stabilizer, and, optionally, certain suitable hardener, catalyst or initiators capable of diffusing into the dispersed uncured or unpolymerized resin droplets; and
c. effecting crosslinking, cure or polymerization of the resin mixture to produce cured thermoset or polymerized thermoplastic resin polymer particles having at least one agricultural active ingredient distributed therein and that after curing are dispersed in the second non-aqueous liquid.
d. To the resulting formulation, optionally additional improvements such as additional surfactants or rheology modifiers and the like can be added to improve its physical or dilution properties

In one embodiment, the dispersion concentrate is prepared by adding the hardener through the continuous phase, after the emulsion is formed, so that the dispersed phase premix is incapable of curing. Alternatively a first very slow-reacting hardener can be used in the dispersion concentrate, and then a second fast-curing hardener, an accelerator or catalyst can be added through the continuous phase. These second agents are added to the continuous phase after the dispersed phase is emulsified, so they must be chosen to be miscible in the continuous phase. The fast curing oil-miscible hardeners include diethyl aminopropyl amine, dimethyl aminopropyl amine, ATCA (3-Aminomethyl-3,5,5-trimethylcyclohexylamine). Mixtures of hardeners may also be employed for extra flexibility.

In one embodiment, the dispersion concentrate is prepared by adding a premix of the dispersed phase to a premix of the continuous phase, wherein:
1) the premix of the dispersed phase is prepared by blending with a high shear mixer: at least one agriculturally active ingredient, at least one suitable curable or polymerisable resin monomer, oligomer, prepolymer or blend thereof, a suitable hardener, catalyst or initiator, an optional non-crosslinkable mobile chemical, and an optional particulate non-porous mineral as diffusion barrier;
2) the premix of the continuous phase is prepared by blending with low shear mixer: a non-aqueous liquid with an emulsion stabilizer [such as a dispersants or surfactant] which is not a colloidal solid.

The resulting mixtures of the dispersed phase premix and the continuous phase premix are stirred under high shear conditions for a suitable time and heated or exposed to light or other electromagnetic radiation conditions (UV, microwave), as needed, in order to polymerise the dispersed phase.

In one embodiment, the mixture of the dispersed phase premix and the continuous phase premix is stirred under high shear conditions for from 5 to 10 minutes and heated to a temperature of from about 30 to 120°C for from about 0.1 to 10 hours in order to effect the curing reaction.

### Regarding an aqueous continuous phase:

The method comprises the following steps:
1. emulsifying said dispersion concentrate in to an aqueous liquid to a mean droplet size of from 0.1 to 200 microns, which liquid contains dispersants and/or surfactants, and does not contain a colloidal solid as (Pickering) emulsion stabilizer, and, optionally, certain suitable hardener, catalyst or initiator capable of diffusing into the dispersed uncured resin droplets; and
2. effecting crosslinking or cure of the cross-linkable resin mixture to produce cured thermoset polymeric particles.

In one embodiment, the dispersion concentrate is prepared by:
a. dissolving or suspending at least one agrochemically active ingredient in a non-aqueous liquid mixture (premix) comprising at least one suitable curable or polymerizable resin (comprising monomers, oligomers, prepolymers or blends thereof), optionally a suitable hardener, catalyst or initiator, and one or more optional components selected from non-porous particulate minerals (as diffusion barrier) and/or non-crosslinkable mobile chemicals;
b. emulsifying said solution or suspension in to an aqueous liquid to a mean droplet size of from 0.1 to 200 microns, which liquid contains dispersants and/or surfactants, and does not contain a colloidal solid as (Pickering) emulsion stabilizer, and, optionally, certain suitable hardener, catalyst or initiators capable of diffusing into the dispersed uncured or unpolymerized resin droplets; and
c. effecting crosslinking, cure or polymerization of the resin mixture to produce cured thermoset or polymerized thermoplastic resin polymer particles having at least one agriculturally active ingredient distributed therein and at least one colloidal solid material at their surfaces and that after curing are dispersed in the aqueous liquid.

To the resulting formulation, optionally additional ingredients such as additional surfactants or rheology modifiers and the like can be added to improve its physical or dilution properties.

In one embodiment, the dispersion concentrate is prepared by adding the hardener through the continuous phase, after the emulsion is formed, so that the dispersed phase premix is incapable of curing. Alternatively a first very slow-reacting hardener can be used in the dispersion concentrate, and then a second fast-curing hardener, an accelerator or catalyst can be added through the continuous phase. These second agents are added to the continuous phase after the dispersed phase is emulsified, so they must be chosen to be miscible in the continuous phase. Suitable fast cure water-miscible hardeners include diethylene triamine, triethylene tetramine, xylene diamine, polyethylene glycol diamine, and polyoxypropylene diamine. Mixtures of hardeners may also be employed for extra flexibility.

The resulting mixtures of the dispersed phase premix and the continuous phase premix are stirred under high shear conditions for a suitable time to form a emulsion and then heated or exposed to light or other electromagnetic radiation conditions (UV, microwave), as needed, in order to polymerize the dispersed phase. The shear rate and duration of the emulsification may be readily determined by one skilled in the art, guided by the following observations: if the shear rate is too low, the emulsion and resulting polymer matrix particles are relatively coarse and may be larger than desired; if the shear rate is instead too high or of too long a duration, the emulsion stabilizing colloid eventually becomes so depleted from the continuous phase that any new interfacial surface between the dispersed and continuous phases is effectively unprotected, at which point rapid coalescence or heteroflocculation of the dispersed phase occurs and the emulsion is effectively lost.

In one embodiment, the mixture of the dispersed phase premix and the continuous phase premix is stirred under high shear conditions for from 5 to 10 minutes and heated to a temperature of from about 30 to 120°C for from about 0.1 to 10 hours in order to effect the curing reaction.

Regarding the term epoxy-polymer, this refers to any polymer comprising cured polymer prepared from a polymerizable epoxy resin made from an epoxy based monomer and it also includes co-polymers with non-epoxy based polymers. All customary di-and polyepoxide monomers, prepolymers or blends thereof are suitable epoxy resins for the practice of this disclosure. In one embodiment, suitable epoxy resins are those that are liquid at ambient temperature. The di- and polyepoxides may be aliphatic, cycloaliphatic or aromatic compounds. Typical examples of such compounds are the diglycidyl ethers of bisphenol A, glycerol or resorcinol, the glycidyl ethers and β-methylglycidyl ethers of aliphatic or cycloaliphatic diols or polyols, including those of hydrogenated bispenol A, ethylene glycol, 1,2-propanediol, 1,3-propanediol, 1,4-butanediol, diethylene glycol, polyethylene glycol, polypropylene glycol, glycerol, trimethylolpropane or 1,4-dimethylolcyclohexane or of 2,2-bis(4-hydroxycyclohexyl)propane, the glycidyl ethers of di- and polyphenols, typically resorcinol, 4,4'-dihydroxydiphenylmethane, 4,4'-dihydroxydiphenyl-2,2-propane, novolaks and 1,1,2,2-tetrakis(4-hydroxyphenyl)ethane, Further examples are N-glycidyl compounds, including diglycidyl compounds of ethylene urea, 1,3-propylene urea or 5-dimethylhydantoin or of 4,4'-methylene-5,5'-tetramethyldihydantoin, or those such as triglycidyl isocyanurate or biodegradable/bio-derived epoxies (such as vegetable oil-based, lignin based).

Further glycidyl compounds of technical importance are the glycidyl esters of carboxylic acids, especially di-and polycarboxylic acids. Typical examples are the glycidyl esters of succinic acid, adipic acid, azelaic acid, sebacic acid, phthalic acid, terephthalic acid, tetra and hexahydrophthalic acid, isophthalic acid or trimellitic acid or of partially polymerized, e.g. dimerised fatty acids.

Exemplary of polyepoxides that differ from glycidyl compounds are the diepoxides of vinylcyclohexene and dicyclopentadiene, 3-(3',4'-epoxycyclohexyl)-8,9-epoxy-2,4-dioxaspiro[5.5]undecane, the 3',4'-epoxycyclohexylmethyl ester of 3,4-epoxycyclohexanecarboxylic acid, butadiene diepoxide or isoprene diepoxide, epoxidized linoleic derivatives or epoxidized polybutadiene.

Other suitable epoxy resins are diglycidyl ethers or advanced diglycidyl ethers of dihydric phenols or dihydric aliphatic alcohols of 2 to 4 carbon atoms, preferably the diglycidyl ethers or advanced diglycidyl ethers of 2,2-bis(4-hydroxyphenyl)propane and bis(4-hydroxyphenyl)methane or a mixture of these epoxy resins.

Suitable epoxy resin hardeners for the practice of this invention are in accordance with claim 6, and may be any suitable epoxy resin hardener, typically selected from primary and secondary amines and their adducts, cyanamide, dicyandiamide, polycarboxylic acids, anhydrides of polycarboxylic acids, polyamines, polyamides, polysulfides, mercaptanes, polyamino-amides, polyadducts of amines and polyepoxides and polyols.

A variety of amine compounds (mono, di or polyamines) can be used as a hardener such as aliphatic amines (diethylene triamine, polyoxypropylene triamine etc), cycloaliphatic amines (isophorone diamine, aminoethyl piperazine or diaminocyclohexane etc), or aromatic amines (diamino diphenyl methane, xylene diamine, phenylene diamine etc). Primary and secondary amines broadly can serve as hardening agents while tertiary amines generally act as catalysts.

Although epoxy hardeners are typically amines, other options exist and these will give extra flexibility to accommodate chemical agents that might be unstable or soluble in the presence of amine, or allow a broader range of cure rates to be achieved.

For example, other suitable hardeners are anhydrides of polycarboxylic acids, typically phthalic anhydride, nadic anhydride, methylnadic anhydride, methyltetrahydrophthalic anhydride, methylhexahydrophthalic anhydride and, in addition, tetrahydrophthalic anhydride and hexahydrophthalic anhydride.

Suitable catalysts such as tertiary amines, borontrifluoride monoethylamine, imidazoles, dicyandiamides can be optionally used to accelerate the epoxy curing reaction.

In the emulsification process, the conditions are chosen such as to obtain the desired particle size of the dispersed phase which is preferably from 0.1 to 200 microns, especially 1 to 80 microns. This is achieved by dispersing the dispersed phase premix in the continuous phase liquid using a suitable high shear mixer such as Ultraturrax®. The continuous phase liquid may contain a surfactant or more preferably a dispersant, which stabilizes the emulsified droplets of the dispersed phase. Examples of suitable dispersants are poly(vinyl pyrrolidone/alkyl), poly(vinyl pyrrolidone/vinyl acetate), poly(methylvinylether/maleic acid), polyethyleneoxide/polypropyleneoxide block copolymers, polyvinyl alcohols, naphthalene sulfonate-formaldehyde copolymer.

The type and amount of surfactant is selected so as to provide acceptable physical stability of the composition during cure or polymerisation process. This can readily be determined by one of skill in the art by routine evaluation of a range of compositions having different amounts of this component. For example, the ability of the surfactant to stabilize the composition can be verified by preparing a test sample with the surfactant and it can be confirmed that the emulsion of droplets is stable and does not exhibit coalescence. Coalescence is apparent by the formation of large droplets visible to the eye, and ultimately by the formation of a layer of liquid monomers, polymer melt or polymer solution within the formulation. Physical stability of the composition during cure or polymerization is acceptable if no significant coalescence is evident and the solid polymer particles are present as a fine dispersion.

Controlled release of agrochemical actives is also important to overcome antagonism between actives where for instance the mode of action of one chemical hinders the uptake or action of a second active. A formulation such as that of the present disclosure that slows delivery of one active can overcome biological antagonism.
The following examples illustrate further some of the aspects of the disclosure but are not intended to limit its scope. Where not otherwise specified throughout this specification and claims, percentages are by weight.

### Examples 1-4.

Tables 1-4 below provide the ingredients for Examples 1-4 respectively. For each of the Examples, formulation preparation and characterisation followed similar procedures:

### A.Materials.

'635 Epoxy Resin' (diglycidyl ether of bisphenol A 81%, alkyl glycidyl ether 19%, manufactured by Reichhold, distributed by US Composites) and '556 Epoxy Hardener' (poly(oxypropylene) diamine 46.5%, nonyl phenol 34%, Phenol, 4,4"-(1-methylethylidene)bis-, polymer with (chloromethyl)oxirane and 1-piperazineethanamine 12.5%, 1-Piperazineethanamine 7%, manufactured by Reichhold Inc., distributed by US Composites) were purchased from US Composites (FL, USA). Resorcinol diglycidyl ether was purchased from Sigma-Aldrich, which was melted at 60°C prior to use. Jeffamine D230 (poly(oxypropylene) diamine) was provided by Huntsman Inc.(TX USA). Isopar V (hydro treated middle distillate (petroleum) or isoparaffinic hydrocarbon) was purchased from ExxonMobil (TX, USA). Agrimer AL10LC (vinyl pyrrolydone/butene copolymer) and Agrimer AL30 (vinyl pyrrolydone/butene copolymer) were provided by ISP (International Specialty Products, NJ, USA). Soprophor TS10 (ethoxylated tristyrylphenol) was purchased from Rhodia. Toximul 8320 (butyl ethyleneoxide propyleneoxide block copolymer) was purchased from Stepan (IL, USA). Pregel (Xanthan gum 2% in water) was used in aqueous formulations as a rheology modifier.

### B. Formulation preparation.

The dispersed phase, as defined in Tables 1-4 below, was premixed by a low shear mixer (e.g. Cowles® mixer) to obtain uniform mixture. The continuous phase (including a dispersant/surfactant), as defined in Tables 1-4 below, was premixed by a low shear mixer. The premixed dispersed phase was added into the continuous phase premix, and the resultant composition was mixed by a high shear mixer (e.g. Ultra Turrax® 7000-12000 rpm) for 5-10minutes to obtain a uniform colloidal formulation. In order to accelerate the epoxy curing reaction, the mixed formulation was heated to approximately 70°C and kept for 3hours, while the formulation was gently agitated to prevent sedimentation.

### C. Characterisation.

The final formulation was examined with a polarized microscope and it was confirmed that all or majority of active ingredients were entrapped in polymer matrix particles. Volume average particle diameter (D [v,0.5]) was determined by a Malvern® particle sizer and is given in Tables 1-4 for each of Examples 1-4.

**Table 1.**

| | Example 1 |
|---|---|
| Dispersed phase | air-milled Thiamethoxam 9.3% |
| | 635 Epoxy Resin 18.5% |
| | 556 Epoxy Hardener 9.3% |
| Continuous phase | Isopar V 61.7% |
| | Agrimer AL30 1.2% |
| Average particle size D[v,0.5] | 25µm |

Continuous phase was heated at 70°C and stirred to fully dissolve the Agrimer AL30

**Table 2.**

| | Example 2 |
|---|---|
| Dispersed phase | Air-milled Azoxystrobin 7.9% |
| | Resorcinol diglycidyl ether 15.8% |
| | Jeffamine D230 7.9% |
| Continuous phase | IsoparV 65.8% |
| | Agrimer AL30 2.6% |
| Average particle size D[v,0.5] | 30µm |

**Table 3.**

| | Example 3 |
|---|---|
| Dispersed phase | s-Metolachlor 19% |
| | Resorcinol diglycidyl ether 12.7% |
| | Jeffamine D230 6.3% |
| Continuous phase | Water 50.6 % |
| | Pregel (2% xanthan gum) 7.6% |
| | Soprophor TS10 0.8% |
| | Toximul 8320 3 % |
| Average particle size D[v,0.5] | 3µm |

**Table 4.**

| | Example 4 |
|---|---|
| Dispersed phase | Tefluthrin 19% |
| | 635 Epoxy Resin 13% |
| | 556 Epoxy Hardener 6% |
| Continuous phase | Water 52 % |
| | Pregel (2% xanthan gum) 5% |
| | Agrimer AL10LC 5 % |
| Average particle size D[v,0.5] | 5µm |

Tefluthrin was melted prior to use.

## Claims

1. A method of producing a dispersion concentrate comprising agrochemicals, the method comprising:
a. dissolving or suspending at least one agrochemically active ingredient in a non-aqueous curable liquid mixture comprising at least one suitable cross-linkable epoxy resin selected from monomers, oligomers, prepolymers and blends thereof;
b. emulsifying said dispersion concentrate in to a second liquid containing dispersant or surfactant to a droplet size of from 0.1 to 200 microns; and
c. effecting crosslinking of the epoxy resin mixture to produce cured thermoset epoxy resin polymer particles having the at least one agricultural active ingredient distributed therein; and
wherein said dispersion is not a Pickering dispersion; and
wherein said dispersion comprises a continuous liquid phase and a dispersed phase.

2. The method of claim 1, wherein the epoxy resin comprises hydrophilic groups.

3. The method of claim 1, wherein the non-aqueous curable liquid mixture further comprises a suitable epoxy resin hardener, catalyst or initiator.

4. The method of claim 1, wherein the non-aqueous curable liquid mixture further comprises one or more components selected from non-porous particulate minerals as diffusion barrier and non-crosslinkable mobile chemicals.

5. The method of claim 1, wherein the continuous liquid phase further comprises a second agrochemical active ingredient.

6. The method of claim 1, wherein the epoxy resin polymer particles are a cured epoxy resin polymer matrix prepared from curing an epoxy resin selected from di-and polyepoxide monomers, prepolymers or blends thereof with a hardener selected from primary and secondary amines and their adducts, cyanamide, dicyandiamide, polycarboxylic acids, anhydrides of polycarboxylic acids, polyamines, polyamides, polysulfides, mercaptanes, polyamino-amides, polyadducts of amines and polyepoxides, polyols and mixtures thereof.

## Patentansprüche

1. Verfahren zur Herstellung eines Dispersionskonzentrats, das Agrochemikalien umfasst, wobei das Verfahren Folgendes umfasst:
a. Lösen oder Suspendieren von mindestens einem agrochemischen Wirkstoff in einer nichtwässrigen härtbaren flüssigen Mischung, die mindestens ein geeignetes vernetzbares Epoxidharz, das aus Monomeren, Oligomeren, Prepolymeren und Mischungen davon ausgewählt ist, umfasst;
b. Emulgieren des Dispersionskonzentrats in einer zweiten Flüssigkeit, die Dispergiermittel oder Tensid enthält, bis zu einer Tröpfchengröße von 0,1 bis 200 Mikron; und
c. Vernetzen der Epoxidharzmischung zur Herstellung von duroplastischen Epoxidharzpolymerteilchen, in denen der mindestens eine agrochemische Wirkstoff gelöst ist; und wobei es sich bei der Dispersion nicht um eine Pickering-Dispersion handelt; und
wobei die Dispersion eine kontinuierliche flüssige Phase und eine dispergierte Phase umfasst.

2. Verfahren nach Anspruch 1, wobei das Epoxidharz hydrophile Gruppen umfasst.

3. Verfahren nach Anspruch 1, wobei die nichtwässrige härtbare flüssige Mischung ferner einen geeigneten Epoxidharz-Härter, -Katalysator oder -Initiator umfasst.

4. Verfahren nach Anspruch 1, wobei die nichtwässrige härtbare flüssige Mischung ferner eine oder mehrere Komponenten, die aus nichtporösen teilchenförmigen Mineralien als Diffusionsbarriere und nicht vernetzbaren mobilen Chemikalien ausgewählt sind, umfasst.

5. Verfahren nach Anspruch 1, wobei die kontinuierliche flüssige Phase ferner einen zweiten agrochemischen Wirkstoff umfasst.

6. Verfahren nach Anspruch 1, wobei es sich bei den Epoxidharzpolymerteilchen um eine aus einem Epoxidharz, das aus Di- und Polyepoxid-Monomeren, Prepolymeren oder Mischungen davon ausgewählt ist, mit einem Härter, der aus primären und sekundären Aminen und deren Addukten, Cyanamid, Dicyandiamid, Polycarbonsäuren, Anhydriden von Polycarbonsäuren, Polyaminen, Polyamiden, Polysulfiden, Mercaptanen, Polyaminoamiden, Polyaddukten von Aminen und Polyepoxiden, Polyolen und Mischungen davon ausgewählt ist, hergestellte gehärtete Epoxidharzpolymermatrix handelt.

## Revendications

1. Procédé de production d'un concentré en dispersion comprenant des substances agrochimiques, le procédé comprenant :
a. la dissolution ou la mise en suspension d'au moins une substance agrochimiquement active dans un mélange liquide durcissable non aqueux comprenant au moins une résine époxy réticulable adaptée choisie parmi des monomères, des oligomères, des prépolymères et des mélanges de ceux-ci ;
b. l'émulsification dudit concentré en dispersion dans un deuxième liquide contenant un dispersant ou un tensioactif à une taille de gouttelette de 0,1 à 200 microns ; et
c. la conduite d'une réticulation du mélange de résine époxy pour produire des particules de polymère de résine époxy thermodurcissable durcie dans lesquelles l'au moins une substance active agricole est distribuée ; et
dans lequel ladite dispersion n'est pas une dispersion de Pickering ; et
dans lequel ladite dispersion comprend une phase liquide continue et une phase dispersée.

2. Procédé de la revendication 1, dans lequel la résine époxy comprend des groupes hydrophiles.

3. Procédé de la revendication 1, dans lequel le mélange liquide durcissable non aqueux comprend en outre un durcisseur de résine époxy adapté, un catalyseur ou un initiateur.

4. Procédé de la revendication 1, dans lequel le mélange liquide durcissable non aqueux comprend en outre un ou plusieurs composants choisis parmi des minéraux particulaires non poreux en tant que substances chimiques mobiles de barrière de diffusion et non réticulables.

5. Procédé de la revendication 1, dans lequel la phase liquide continue comprend en outre une deuxième substance active agrochimique.

6. Procédé de la revendication 1, dans lequel les particules de polymère de résine époxy sont une matrice de polymère de résine époxy durcie préparée par durcissement d'une résine époxy choisie parmi des monomères, des prépolymères de di- et polyépoxyde ou des mélanges de ceux-ci avec un durcisseur choisi parmi des amines primaires et secondaires et leurs adduits, le cyanamide, le dicyandiamide, des acides polycarboxyliques, des anhydrides d'acides polycarboxyliques, des polyamines, des polyamides, des polysulfures, des mercaptanes, des polyamino-amides, des polyadduits d'amines et de polyépoxydes, des polyols et des mélanges de ceux-ci.
